# DEMANDE DE BREVET EUROPEEN

(11) **EP 3 269 239 A1**
(43) Date de publication de la demande: **17.01.2018**
(21) Numéro de dépôt: 17180185.5
(22) Date de dépôt: 07.07.2017
(51) Int. Cl.: A01M 7/00, A01C 23/04

(54) **DISPOSITIF D'ÉCOULEMENT DE PRODUIT POUR ENGIN AGRICOLE**

(30) Priorité: 13.07.2016 FR 1656743
(71) Demandeur: Exel Industries, 75009 Paris (FR)
(72) Inventeur: CHAPERON, Fabien, 75009 PARIS (FR)
(74) Mandataire: Gaillarde, Frédéric F. Ch.

(57) **Abrégé**

La présente invention concerne un dispositif d'écoulement pour ensemble de dispersion d'un produit, par exemple destiné à être rapporté sur un engin agricole, comprenant un élément de réception, tel qu'une trémie, destiné à recevoir le produit, caractérisé en ce que le dispositif d'écoulement (3) comprend un système de mesure de masse (43) configuré pour mesurer la masse de l'élément de réception.

## Description

La présente invention concerne un dispositif d'écoulement de produit pour engin agricole, destiné à être dispersé sur des cultures.

Généralement, les produits agricoles sont introduits directement dans un pulvérisateur. Dans certains cas, les pulvérisateurs présentent une ouverture d'introduction de produit à une hauteur inférieur à 1,3 mètres ce qui permet un accès depuis le sol pour un opérateur. Dans d'autres cas, l'ouverture d'introduction est légèrement plus élevée. Un marchepied permet alors à l'opérateur de verser l'ensemble des produits liquides et solides directement par cette ouverture d'introduction. Une telle façon d'introduire le produit dans un pulvérisateur expose l'utilisateur et l'environnement à des risques sanitaires dus aux contacts avec le produit (projections lors du versement, inhalation, appui de l'utilisateur contre l'ouverture d'introduction souillée). Cette façon d'introduire le produit expose également l'utilisateur à des troubles musculo-squelettiques.

Afin de pallier ces risques, les engins agricoles ont été équipés de dispositif d'écoulement permettant une introduction plus aisée du produit.

Cette solution a permis de réduire certains risques énoncés ci-dessus.

Toutefois, il n'est pas possible pour l'utilisateur de déterminer la quantité exacte de produit introduit. L'utilisateur ne peut alors qu'insérer une quantité de produit qu'il évaluera visuellement. Il est alors fréquent qu'une quantité trop faible ou trop importante soit introduite dans le dispositif d'écoulement. L'insertion d'une quantité trop faible de produit entraine une diminution du débit de chantier car il est nécessaire d'arrêter l'engin pour introduire la quantité de produit manquante. L'insertion d'une quantité trop importante de produit conduit à un gaspillage de ce produit ayant des conséquences économiques et environnementales non négligeables. Il est connu de mesurer la quantité de produit à incorporer dans le dispositif d'écoulement par des systèmes de mesure, par exemple un pichet, un mesureur ou une balance. Cependant, la mesure de la quantité de produit à introduire par ces dispositifs est chronophage et peu précis. En outre, des manipulations de produit supplémentaires sont nécessaires, exposant l'utilisateur à des risques sanitaires. Enfin, le rinçage d'éléments supplémentaire est nécessaire rendant les opérations de pulvérisation plus complexes.

La présente invention a pour but de résoudre tout ou partie des inconvénients mentionnés ci-dessus.

À cet effet, la présente invention concerne un dispositif d'écoulement pour ensemble de dispersion d'un produit, par exemple destiné à être rapporté sur un engin agricole, comprenant un élément de réception, tel qu'une trémie, destiné à recevoir le produit, caractérisé en ce que le dispositif d'écoulement comprend un système de mesure de masse configuré pour mesurer la masse de l'élément de réception.

Grâce à cette disposition, l'utilisateur peut assurer une meilleure gestion de la quantité de produit inséré dans le dispositif d'écoulement. En effet, l'utilisateur a ainsi connaissance de la quantité précise de produit inséré. Les impacts économique et environnemental sont ainsi limités.

On entend par produit tous types de produits agricoles, par exemple des produits phytosanitaires, des intrants ou des biostimulants, à l'état liquide ou solide et notamment pulvérulent tel que poudre ou granules.

On entend par engin agricole tout type d'engin agricole mobile de type tracté, porté ou automoteur, et plus particulièrement tout type d'engin agricole de pulvérisation.

Selon un aspect de l'invention, le système de mesure de masse est configuré pour mesurer et/ou afficher la masse de l'élément de réception et du produit contenu dans l'élément de réception. Grâce à cette disposition, l'utilisateur a connaissance de la masse de produit contenu dans le dispositif d'écoulement et assure ainsi une gestion plus performante du débit de chantier.

Selon un aspect de l'invention, le système de mesure de masse comprend un système de transmission d'information de masse configuré pour transmettre une information de masse à l'utilisateur.

Selon un aspect de l'invention, le système de transmission d'information de masse comprend une interface visuelle.

Selon un aspect de l'invention, l'interface visuelle comprend au moins un marqueur visuel correspondant à une information de masse prédéterminée. Selon un aspect de l'invention, l'interface visuelle comprend une pluralité de marqueur visuel correspondant à une graduation de l'information de masse.

Selon un aspect de l'invention, l'interface visuelle comprend un indicateur mobile, configuré pour occuper une pluralité de positions, chaque position correspondant à une information de masse.

Selon un aspect de l'invention, l'indicateur mobile est disposé face à la pluralité de marqueurs visuels. Ainsi, l'utilisateur peut établir une correspondance entre la position adoptée par l'indicateur mobile et le marqueur visuel le plus proche de cette position pour déterminer la masse de produit introduit dans l'élément de réception.

Selon un aspect de l'invention, le système de transmission d'information de masse comprend une interface de communication configurée pour transmettre une information de masse à une interface utilisateur, destinée à afficher l'information de masse. Ainsi, l'information est accessible facilement pour l'utilisateur.

Selon un aspect de l'invention, l'interface de communication est configurée pour transmettre l'information de masse à l'interface utilisateur par signal électrique.

Selon un aspect de l'invention, l'interface de communication est configurée pour transmettre l'information de masse à l'interface utilisateur par un protocole de communication sans fil, par exemple un protocole de communication sans fil de type conforme à la norme IEEE 802.11 / WIFI ou de type conforme à la norme réseau UMTS ou de type conforme à toute autre norme réseau.

Selon un aspect de l'invention, le système de transmission d'information de masse comprend l'interface utilisateur, configurée pour afficher une information de masse. Ainsi, l'interface utilisateur est intégrée dans le système de mesure de masse.

Selon un aspect de l'invention, l'interface utilisateur est disposée en fixe à proximité du dispositif d'écoulement ou de commandes de l'engin agricole.

Selon un aspect de l'invention, l'interface utilisateur est disposée sur un appareil mobile dépendant de l'engin agricole, tel qu'une télécommande comprenant une fenêtre d'affichage.

Selon un aspect de l'invention, l'interface de communication est configurée pour interagir avec une interface utilisateur externe.

Selon un aspect de l'invention, l'interface utilisateur est notamment réalisée comme une interface Web hébergée sur un serveur et accessible à distance ou localement par un terminal de type ordinateur fixe ou terminal portable tel qu'un ordinateur portable, une tablette ou un ordiphone.

Selon un aspect de l'invention, le système de mesure de masse comprend une unité de contrôle agencée pour transmettre une information de masse à l'interface de communication.

Selon un aspect de l'invention, le système de mesure de masse comprend au moins un capteur de masse.

Selon un aspect de l'invention, le dispositif d'écoulement comprend un bâti et dans lequel l'au moins un capteur de masse est disposé entre l'élément de réception et le bâti.

Selon un autre mode de réalisation, le système de mesure de masse comprend un seul capteur de masse combiné à un axe de rotation disposé entre le support et le bâti. Le capteur de masse est de type flexion. Dans ce cas, afin de garantir une bonne précision de la mesure, il est nécessaire que la distance entre le capteur et le centre de gravité de produit introduit soit constante, et que les frottements sur l'axe de rotation soient négligeables.

Selon un autre mode de réalisation non représenté, le système de mesure de masse comprend un seul capteur de type à appui central entre le support et le bâti ayant pour avantage la possibilité de décentrer le capteur par rapport au centre de gravité du logement de réception et donc de positionner l'élément de réception en porte-à-faux par rapport au bâti.

Selon un autre mode de réalisation non représenté, le système de mesure de masse comprend deux capteurs de type à appui central entre le support et le bâti de part et d'autre de l'élément de réception ayant pour avantage un meilleur maintien de celui-ci contrairement au mode de réalisation précédent.

Selon un aspect de l'invention, le dispositif d'écoulement comprend un support sur lequel l'élément de réception est configuré pour être disposé, et dans lequel l'au moins un capteur de masse est disposé entre le support et le bâti.

Selon un aspect de l'invention, le capteur de masse comprend une jauge de contrainte.

Selon un aspect de l'invention, l'au moins une jauge de contrainte est ménagée dans le bâti du dispositif d'écoulement.

Selon un aspect de l'invention, le système de mesure de masse est configuré pour commander, en fonction d'une valeur seuil prédéterminée de l'information de masse :
- le déclenchement d'une alarme sonore et/ou visuelle ; et/ou
- l'ouverture de l'élément de fermeture ; et/ou
- l'actionnement de l'accélérateur de fluide.

Grâce à ces dispositions, l'utilisateur est en outre averti par alarme si la quantité de produit introduite dans le dispositif d'écoulement est inférieure ou supérieure à une quantité seuil prédéterminée.

On entend par valeur seuil prédéterminée, une valeur de masse ou de volume, déterminée en fonction de la quantité de produit à pulvériser. La valeur seuil peut être définie directement par l'utilisateur ou indirectement, c'est-à-dire calculée électroniquement en fonction de paramètres extérieurs renseignés par l'utilisateur, tel que la surface à traiter, le type de sol à traiter, etc.

Selon un aspect de l'invention, l'ouverture de l'élément de fermeture est commandée avec un temps de latence, par exemple de 1 à 3 secondes, par rapport au déclenchement de l'alarme sonore et/ou visuelle, et/ou par rapport à la stabilisation de l'information de masse.

Selon un aspect de l'invention, en cas de dépassement de la valeur seuil, l'utilisateur est averti du dépassement par affichage sur l'interface utilisateur.

Selon un aspect de l'invention, en cas de dépassement de la valeur seuil, l'élément de fermeture est verrouillé dans une position fermée. L'ouverture de l'élément de fermeture n'est alors pas possible.

Selon un aspect de l'invention, l'élément de réception comprend au moins une portion lisse et/ou anti-adhérente.

Selon un aspect de l'invention, l'élément de réception comprend au moins une portion présentant des propriétés anti-adhérente.

Selon un aspect de l'invention, l'élément de réception comprend au moins une portion comprenant un revêtement anti adhérent.

Selon un aspect de l'invention, l'élément de réception comprend au moins une portion en matériau métallique, tel que l'acier inoxydable, ou en matériau plastique, par exemple thermoplastique.

Selon un aspect de l'invention, le dispositif d'écoulement comprend un système de mesure de remplissage de l'élément de réception.

Grâce à ces dispositions, l'utilisateur peut déduire la densité du produit inséré dans l'élément de réception. L'utilisateur dispose ainsi de plusieurs paramètres lui permettant de contrôler la quantité de produit introduite dans l'élément de réception.

Selon un aspect de l'invention, le système de mesure de remplissage comprend un système de transmission d'information de remplissage configuré pour transmettre une information de remplissage à l'utilisateur.

Selon un aspect de l'invention, le système de transmission d'information de remplissage comprend une interface visuelle. Ainsi, l'utilisateur peut contrôler plus précisément la quantité de produit introduite dans l'élément de réception.

Selon un aspect de l'invention, l'élément de réception comprend au moins une paroi, définissant un logement de réception.

Selon un aspect de l'invention, l'au moins une paroi comprend une portion transparente. Ainsi, l'utilisateur peut contrôler de façon plus précise la quantité de produit introduite dans l'élément de réception.

Selon un aspect de l'invention, l'élément de réception comprend une ouverture d'introduction et une ouverture de sortie.

Selon un aspect de l'invention, la portion transparente s'étend sensiblement de l'ouverture de sortie à l'ouverture d'introduction.

Selon un aspect de l'invention, l'interface visuelle comprend la portion transparente.

Selon un aspect de l'invention, l'interface visuelle au moins un marqueur visuel correspondant à une information de remplissage de l'élément de réception. Ainsi, l'utilisateur peut contrôler plus précisément la quantité de produit introduite dans l'élément de réception.

Selon un aspect de l'invention, la portion transparente comprend une pluralité de marqueurs visuels correspondant à une graduation d'informations de remplissage. Cette disposition permet d'améliorer la précision de la mesure de la quantité de produit introduit dans l'élément de réception.

Selon un aspect de l'invention, l'élément de réception comprend au moins un détecteur de remplissage disposé entre l'ouverture d'introduction et l'ouverture de sortie. Grâce à cette disposition, la mesure du remplissage de l'élément de réception est réalisée électroniquement. La marge d'erreur de mesure de la quantité de produit inséré dans le dispositif d'écoulement est donc réduite.

Selon un aspect de l'invention, l'au moins un détecteur de remplissage comprend un capteur de présence, un capteur de luminosité ou un capteur de niveau.

Selon un aspect de l'invention, le système de transmission d'information de remplissage comprend une interface de communication configurée pour transmettre une information de remplissage à une interface utilisateur, destinée à afficher l'information de mesure de remplissage. Ainsi, l'information de remplissage est accessible facilement pour l'utilisateur.

Selon un aspect de l'invention, l'interface de communication est configurée pour transmettre l'information de remplissage à l'interface utilisateur par signal électrique.

Selon un aspect de l'invention, l'interface de communication est configurée pour transmettre l'information de remplissage à l'interface utilisateur par un protocole de communication sans fil, par exemple un protocole de communication sans fil de type conforme à la norme IEEE 802.11 / WIFI ou de type conforme à la norme réseau UMTS ou de type conforme à toute autre norme réseau.

Selon un aspect de l'invention, l'interface utilisateur est disposée en fixe à proximité du dispositif d'écoulement ou de commandes de l'engin agricole.

Selon un aspect de l'invention, l'interface utilisateur est disposée sur un appareil mobile dépendant de l'engin agricole, tel qu'une télécommande comprenant une fenêtre d'affichage.

Selon un aspect de l'invention, l'interface de communication est configurée pour interagir avec une interface utilisateur externe.

Selon un aspect de l'invention, l'interface utilisateur est notamment réalisée comme une interface Web hébergée sur un serveur et accessible à distance ou localement par un terminal de type ordinateur fixe ou terminal portable tel qu'un ordinateur portable, une tablette ou un ordiphone.

Selon un aspect de l'invention, le système de mesure de remplissage comprend une unité de contrôle agencée pour transmettre une information de remplissage à l'interface de communication.

Selon un aspect de l'invention, le système de transmission d'information de remplissage et le système de transmission d'information de masse sont configurés pour transmettre une information de remplissage et respectivement une information de masse à une même interface utilisateur. Grâce à ces dispositions, l'information de masse et l'information de remplissage sont affichées sur une même interface. La lecture des informations est donc facilitée.

Selon un aspect de l'invention, l'interface utilisateur du système de transmission d'information de remplissage et l'interface utilisateur du système de transmission d'information de masse sont indépendantes. Ainsi, le système de mesure de masse et le système de mesure de remplissage peuvent fonctionner de façon indépendante.

Selon un aspect de l'invention, l'unité de contrôle du système de mesure de remplissage est agencée pour fournir une information de volume de produit inséré dans l'élément de réception.

Selon un aspect de l'invention, le dispositif d'écoulement comprend un système de conversion de l'information de masse vers une information de volume à partir d'une information de densité du produit. Grâce à ces dispositions l'utilisateur peut disposer d'une information de volume à la place de l'information de masse.

Selon un aspect de l'invention, l'information de masse est une valeur exprimée en une unité de masse par exemple le kilogramme.

Selon un aspect de l'invention, l'information de volume est une valeur exprimée en une unité de volume par exemple le litre.

Selon un aspect de l'invention, le système de conversion est configurable par l'utilisateur.

Selon un aspect de l'invention, le dispositif d'écoulement comprend un système de vibration configuré pour transmettre un mouvement de vibration à l'au moins une paroi du logement de réception.

Grâce aux dispositions selon l'invention, le produit s'écoule plus facilement le long de la paroi du logement de réception même lorsque cette paroi est humide et donc collante. Le dispositif d'écoulement selon l'invention permet en outre de limiter les risques de contamination d'un utilisateur, par exemple lors d'opération de maintenance ou de débouchage et de rinçage, le résidu de produit sur la paroi du logement de réception étant moindre.

Les dispositions selon l'invention permettent également d'augmenter le débit de chantier.

Selon un aspect de l'invention, le dispositif d'écoulement comprend un élément de fermeture agencé pour obstruer l'ouverture de sortie.

Selon un aspect de l'invention, l'élément de fermeture est une vanne.

Selon un aspect de l'invention, l'au moins une paroi de logement de réception converge vers l'ouverture de sortie. La paroi constitue ainsi une rampe de guidage du produit.

Selon un aspect de l'invention, l'ouverture d'introduction est de dimension plus importante que l'ouverture de sortie. Il est ainsi plus aisé pour l'utilisateur de verser le produit dans le dispositif d'écoulement et les risques de gaspillages du produit sont ainsi limités, voir supprimés.

Selon un aspect de l'invention, le dispositif d'écoulement comprend un système de rinçage des contenants de produit destinés à être vidés dans le dispositif d'écoulement. Cette disposition selon l'invention permet d'éviter le gaspillage de produit en vidant dans le dispositif d'écoulement le produit de façon optimale.

Selon un aspect de l'invention, le système de rinçage comprend un élément de commande.

Selon un aspect de l'invention, l'élément de commande du système de rinçage comprend une vanne.

Selon un aspect de l'invention, le dispositif d'écoulement comprend un système de nettoyage de l'au moins une paroi du dispositif d'écoulement. Grâce à cette disposition, l'au moins une paroi du dispositif d'écoulement est nettoyée et permet d'éviter une contamination de l'utilisateur. Avantageusement, le dispositif d'écoulement comprend un système de nettoyage de l'ensemble des parois.

Selon un aspect de l'invention, le système de nettoyage comprend un élément de commande.

Selon un aspect de l'invention, l'élément de commande du système de nettoyage comprend une vanne.

Selon un aspect de l'invention, le système de vibration est solidaire de l'au moins une paroi. Le mouvement de vibration est ainsi transmis mécaniquement à l'au moins une paroi.

Selon un aspect de l'invention, la solidarisation du système de vibration à l'au moins une paroi est réversible.

Selon un aspect de l'invention, le système de vibration est fixé à l'au moins une paroi par un système de fixation tel qu'une queue d'aronde, un système vis et écrou coopérant avec une ouverture dans la paroi, un système de vissage dans l'épaisseur de la paroi, etc.

Selon un aspect de l'invention, la solidarisation du système de vibration à l'au moins une paroi est irréversible.

Selon un aspect de l'invention, le système de vibration est fixé à l'au moins une paroi par soudure.

Selon un aspect de l'invention, le système de vibration est disposé à l'extérieur du logement de réception.

Selon un aspect de l'invention, le système de vibration est indépendant de l'au moins une paroi. Par exemple, le système de vibration est un percuteur, tel qu'un marteau frappant la paroi. Par exemple, le marteau est une combinaison entre un axe de rotation, un excentrique et un embiellage.

Selon un aspect de l'invention, le système de vibration est disposé directement contre l'au moins une paroi.

Selon un aspect de l'invention, le système de vibration est disposé sur un socle fixé sur l'au moins une paroi.

Selon un aspect de l'invention, le système de vibration comprend un élément de commande. L'utilisateur peut ainsi activer le système de vibration en fonction des nécessités.

Selon un aspect de l'invention, le dispositif d'écoulement comprend une portion de circuit hydraulique raccordant fluidiquement le système de vibration et le logement de réception, le système de vibration étant configuré pour fonctionner à l'énergie hydraulique. Ainsi, la source d'énergie utilisée pour le fonctionnement du système de vibration est le fluide basé sur le produit.

Selon un aspect de l'invention, le produit est destiné à être fluidifié.

Selon un aspect de l'invention, le système de vibration est agencé pour fonctionner par une source hydraulique basée sur le produit fluidifié.

Selon un aspect de l'invention, l'élément de commande du système de vibration comprend une vanne.

Selon un aspect de l'invention, le système de vibration est agencé pour fonctionner par une source hydraulique à l'huile.

Selon un mode de réalisation, le système de vibration est agencé pour fonctionner à l'énergie électrique.

Selon un aspect de l'invention, l'élément de commande du système de vibration comprend un interrupteur.

Selon un aspect de l'invention, le système de vibration est agencé pour fonctionner sous une tension électrique à choisir parmi 380Vac, 220Vac, 24Vdc, 12Vdc.

Selon un mode de réalisation, le système de vibration est agencé pour fonctionner à l'énergie pneumatique.

Le système de vibration comprend un vibrateur. On entend par vibrateur tout type de mécanisme produisant un mouvement de vibration, par exemple un vibrateur à balourd, vibrateur à billes, un vibrateur à rouleaux, un vibrateur à piston, un vibrateur à percuteur ou un vibrateur électromagnétique.

Selon un mode de réalisation de l'invention, le vibrateur comprend une turbine déséquilibrée par un balourd. La turbine est agencée pour être mise en rotation par une énergie hydraulique.

Selon un mode de réalisation, le vibrateur comprend un carter comportant un piston, agencé pour être déplacé par air comprimé ou électromagnétisme. Les allers-retours rapides du piston provoquent des percussions linéaires et ainsi un mouvement de vibration.

Selon un mode de réalisation, le dispositif d'écoulement comprend un système d'amortissement agencé pour amortir le mouvement de vibration du système de vibration. Le système d'amortissement permet ainsi de concentrer l'énergie.

Selon un aspect de l'invention, le système d'amortissement comprend au moins un amortisseur.

Selon un aspect de l'invention, l'amortisseur du système d'amortissement comprend au moins un élément élastique.

Selon un aspect de l'invention, l'élément élastique peut par exemple être de type à ressort ou être un plot élastique.

Selon un aspect de l'invention, l'amortisseur comprend un vérin hydraulique.

Selon un aspect de l'invention, le système d'amortissement comprend un support du dispositif d'écoulement comprenant une première portion solidaire du dispositif d'écoulement, et une deuxième portion, relié à un bâti du dispositif d'écoulement.

Selon un aspect de l'invention, le bâti du dispositif d'écoulement est solidaire du châssis de l'engin agricole.

Selon un aspect de l'invention, le bâti du dispositif d'écoulement est mobile par rapport au châssis de l'engin agricole entre une position escamotée et une position déployée dans laquelle l'ouverture d'introduction du dispositif d'écoulement est destinée à être accessible à un utilisateur.

Selon un aspect de l'invention, le bâti du dispositif d'écoulement est indépendant du châssis de l'engin agricole. Grâce à ces dispositions, l'encombrement du dispositif d'écoulement est compatible avec l'encombrement du dispositif de dispersion. Par ailleurs, grâce à ces dispositions, l'adaptabilité du dispositif d'écoulement est compatible avec les différentes possibilités d'intégration sur les différents dispositifs de dispersion.

Selon un aspect de l'invention, l'élément élastique est disposé entre la première portion et la deuxième portion du support du dispositif d'écoulement.

Selon un aspect de l'invention, l'élément élastique comprend une première extrémité, solidaire de la première portion du support du dispositif d'écoulement, et une deuxième extrémité, solidaire de la deuxième portion du support du dispositif d'écoulement.

La présente invention se rapporte en outre à un ensemble de dispersion comprenant :
- un dispositif d'écoulement conforme à l'une des caractéristiques susmentionnées ;
- un dispositif de dispersion du produit.

Selon un aspect de l'invention, l'ensemble de dispersion comprend un circuit hydraulique raccordant fluidiquement le dispositif d'écoulement et le dispositif de dispersion.

Selon un aspect de l'invention, un fluide est destiné à circuler dans le circuit hydraulique.

On entend par fluide, le produit ou un produit fluidifié par de l'eau ou par un solvant, pur ou dilué.

Selon un aspect de l'invention, le dispositif de dispersion comprend un pulvérisateur.

Selon un aspect de l'invention, l'ensemble de dispersion comprend un réservoir.

Selon un aspect de l'invention, le dispositif de dispersion est agencé pour prélever le produit dans le réservoir avant de le disperser.

Selon un mode de réalisation, la portion de circuit hydraulique et plus particulièrement le système de vibration, est en communication fluidique avec le circuit hydraulique. Ainsi, la source d'énergie utilisée pour le fonctionnement du système de vibration est le fluide basé sur le produit. Le fonctionnement de l'ensemble de dispersion est facilité.

Selon un mode de réalisation, le système de vibration est indépendant du circuit hydraulique.

Selon un aspect de l'invention, le circuit hydraulique comprend une pluralité de conduits interconnectés.

Selon un aspect de l'invention, le circuit hydraulique comprend un accélérateur de fluide disposé en aval du dispositif d'écoulement.

Plus particulièrement, l'accélérateur de fluide est disposé en aval de l'élément de fermeture du dispositif d'écoulement.

Selon un aspect de l'invention, l'accélération du fluide comprend un système venturi.

On entend par système venturi, un conduit d'une section de dimension déterminée comprenant une portion de section de dimension inférieure, de façon à former un différentiel de pression de fluide et ainsi de provoquer une accélération du fluide.

Selon un aspect de l'invention, le réservoir est disposé en aval de l'accélérateur de fluide.

Selon un aspect de l'invention, le circuit hydraulique comprend une pompe, disposée en aval du réservoir et en amont de l'accélérateur de fluide.

Selon un aspect de l'invention, le solvant est disposé dans le réservoir.

Selon un aspect de l'invention, la pompe est configurée pour convoyer le solvant depuis le réservoir vers l'aval de l'élément de fermeture du dispositif d'écoulement afin de fluidifier le produit.

Selon un aspect de l'invention, le système de vibration est raccordé à la pompe, en aval de celle-ci.

Selon un aspect de l'invention, le système de vibration est relié au circuit hydraulique entre l'élément de fermeture et l'accélérateur de fluide.

Ainsi, lorsque le système de vibration est en fonctionnement, la pompe propulse le fluide dans le système de vibration à partir du réservoir.

Selon un aspect de l'invention, le système de rinçage est relié hydrauliquement à la pompe.

Selon un aspect de l'invention, la pompe est configurée pour convoyer le solvant depuis le réservoir vers le système de rinçage.

Selon un aspect de l'invention, le système de nettoyage est relié hydrauliquement à la pompe.

Selon un aspect de l'invention, la pompe est configurée pour convoyer le solvant depuis le réservoir vers le système de nettoyage afin de nettoyer l'au moins une paroi du logement de réception.

La présente invention concerne en outre un engin agricole comprenant un ensemble de dispersion selon les caractéristiques susmentionnées.

La présente invention se rapporte en outre à un procédé de remplissage d'un dispositif d'écoulement conforme à l'une quelconque des caractéristiques susmentionnées, comprenant les étapes consistant à :
- déterminer au moins une valeur seuil d'une information de masse et/ou d'une information de volume ;
- remplir l'élément de réception jusqu'à atteindre la valeur seuil.

Selon un aspect de l'invention, le procédé de remplissage comprend une étape consistant à renseigner une valeur de consigne au système de mesure de masse correspondant à la valeur seuil.

Selon un aspect de l'invention, le procédé de remplissage comprend, suite à l'étape de remplissage de l'élément de réception, une étape consistant à ouvrir l'élément de fermeture et/ou actionner manuellement ou automatiquement l'accélérateur de fluide.

D'autres caractéristiques et avantages de la présente invention apparaîtront à la lumière de la description qui va suivre et à l'examen des figures ci-annexées, dans lesquelles :
- la figure 1 représente un ensemble de dispersion comprenant un dispositif d'écoulement selon l'invention ; et
- la figure 2 représente un dispositif d'écoulement selon l'invention ;
- la figure 3 représente un mode de réalisation du système de mesure de masse ;
- la figure 4 représente un autre mode de réalisation du système de mesure de masse.

Sur l'ensemble de ces figures, des références identiques ou analogues désignent des organes ou ensemble d'organes identiques ou analogues.

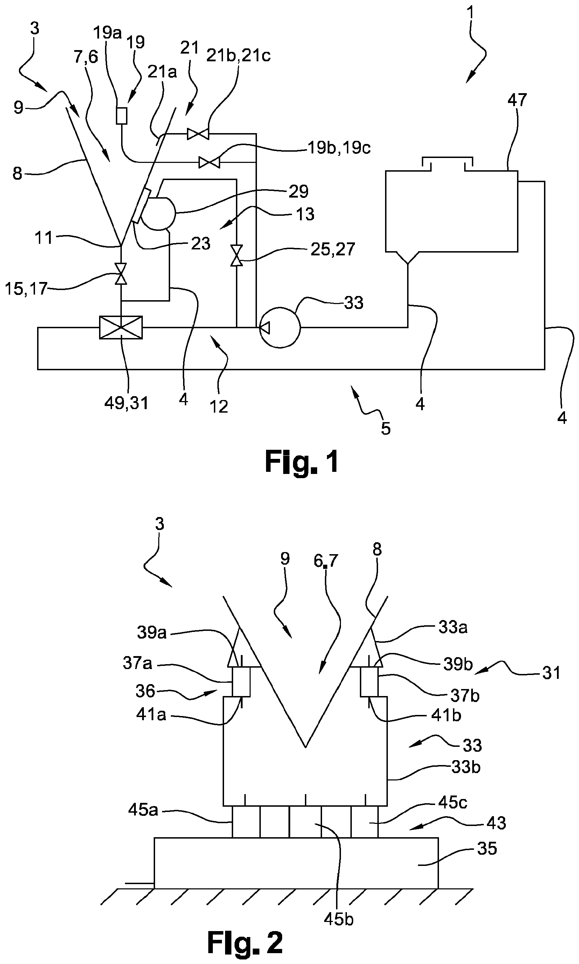

La figure 1 représente un ensemble de dispersion 1 comprenant un dispositif d'écoulement 3 et un dispositif de dispersion. Le dispositif d'écoulement 3 et le dispositif de dispersion sont en communication fluidique.

L'ensemble de dispersion comprend un circuit hydraulique 5 agencé pour relier hydrauliquement le dispositif d'écoulement 3 et le dispositif de dispersion. Un fluide est destiné à circuler dans le circuit hydraulique 5. On entend par fluide le produit ou un produit fluidifié par de l'eau ou par un solvant, pur ou dilué. Le circuit hydraulique comprend une pluralité de conduits interconnectés 4.

L'ensemble de dispersion est agencé pour être rapporté par exemple sur un engin agricole. On entend par engin agricole tout type d'engin agricole mobile de type tracté, porté ou automoteur, et plus particulièrement tout type d'engin agricole de pulvérisation. L'ensemble de dispersion comprend un pulvérisateur.

Le dispositif d'écoulement 3 comprend un élément de réception 6 comprenant une paroi 8 délimitant un logement de réception 7 du produit. L'élément de réception 6 est constitué ici par une trémie. Le logement de réception 7 comprend une ouverture d'introduction 9 par laquelle le produit est destiné à être inséré dans le dispositif d'écoulement 3. Le logement de réception 7 comprend en outre une ouverture de sortie 11 par laquelle le produit est destiné à rejoindre le pulvérisateur.

Le dispositif d'écoulement 3 comprend un système de vibration 13 configuré pour transmettre un mouvement de vibration à au moins une paroi 8 du logement de réception 7. Selon un mode de réalisation du logement de réception 7, celui-ci comprend une paroi tronconique, sensiblement en forme d'entonnoir. Selon un autre mode de réalisation du logement de réception 7, celui-ci comprend quatre parois planes convergeant vers l'ouverture de sortie 11. Le produit s'écoule ainsi plus facilement le long de la paroi 8 du logement de réception 7. Le dispositif d'écoulement 3 selon l'invention permet en outre de limiter les risques de contamination d'un utilisateur, par exemple lors d'opération de maintenance, le résidu de produit sur la paroi 8 du dispositif d'écoulement 3 étant moindre. Le débit de chantier est ainsi augmenté.

On entend par produit tout type de produits agricoles, par exemple des produits phytosanitaires, des intrants ou des biostimulants, à l'état liquide ou solide et plus particulièrement des produits pulvérulent tel que poudres ou granules.

Le dispositif d'écoulement 3 comprend un élément de fermeture 15 agencé pour obstruer l'ouverture de sortie 11. L'élément de fermeture 15 comprend une vanne 17.

La paroi 8 du dispositif d'écoulement 3 converge vers l'ouverture de sortie 11. La paroi 8 constitue ainsi une rampe de guidage du produit. Le logement de réception 7 a ainsi la forme d'un entonnoir.

L'ouverture d'introduction 9 est de dimension plus importante que l'ouverture de sortie 11. Il est ainsi plus aisé pour l'utilisateur de verser le produit dans le dispositif d'écoulement 3 et les risques de gaspillages du produit sont ainsi limités, voir supprimés.

Le dispositif d'écoulement 3 comprend un système de rinçage 19 des contenants de produit destinés à être vidés dans le logement de réception 7 permettant d'éviter le gaspillage de produit. Le système de rinçage 19 comprend une buse 19a et un élément de commande 19b. L'élément de commande 19b du système de rinçage 19 comprend une vanne 19c.

Le dispositif d'écoulement 3 comprend un système de nettoyage 21 de la paroi 8 du logement de réception 7. La paroi 8 du logement de réception 7 peut ainsi être nettoyée pour permettre d'éviter une contamination de l'utilisateur. Le système de nettoyage 21 comprend une rampe de sortie d'eau 21a et un élément de commande 21b. L'élément de commande 21b comprend une vanne 21c.

Le système de vibration 13 est solidaire de la paroi 8. Le mouvement de vibration est transmis mécaniquement à la paroi. Le système de vibration 13 peut être disposé directement contre la paroi 8. Le système de vibration 13 peut également être disposé sur un socle 23 fixé à la paroi 8.

Le système de vibration 13 comprend un élément de commande 25. L'utilisateur peut ainsi activer le système de vibration 13 en fonction des nécessités. L'élément de commande 25 du système de vibration 13 comprend une vanne 27

Selon un mode de réalisation, le système de vibration 13 est agencé pour fonctionner à l'énergie hydraulique. Le système de vibration 13 peut alors fonctionner grâce à un circuit hydraulique par exemple à l'huile, indépendant du circuit hydraulique 5.

Selon un autre mode de réalisation, le système de vibration 13 est agencé pour fonctionner par une source hydraulique basée sur un mélange du produit avec de l'eau, comme représenté en figure 1. Le dispositif d'écoulement comprend une portion de circuit hydraulique 12 reliant fluidiquement le système de vibration 13 et le logement de réception 7. La portion de circuit hydraulique 12 est en communication fluidique avec le circuit hydraulique 5. Ainsi, la source d'énergie utilisée pour le fonctionnement du système de vibration est le fluide basé sur le produit. Le fonctionnement de l'ensemble de dispersion est facilité.

Selon une alternative aux modes de réalisation décrits ci-dessus, le système de vibration 13 est agencé pour fonctionner à l'énergie électrique. L'élément de commande 25 du système de vibration 13 comprend alors un interrupteur. Le système de vibration 13 est agencé pour fonctionner sous une tension électrique à choisir parmi 380Vac, 220Vac, 24Vdc, 12Vdc.

Selon une alternative aux modes de réalisation décrits ci-dessus, le système de vibration 13 est agencé pour fonctionner à l'énergie pneumatique.

Le système de vibration 13 comprend un vibrateur 29. On entend par vibrateur 29 tout type de mécanisme produisant un mouvement de vibration, par exemple un vibrateur à balourd, un vibrateur à billes, un vibrateur à rouleaux, un vibrateur à piston, un vibrateur à percuteur ou un vibrateur électromagnétique.

Selon un mode de réalisation de l'invention, le vibrateur 29 comprend un arbre configuré pour être entraîné en rotation, par exemple une turbine, comprenant une masse excentrée par exemple un balourd. L'arbre est ainsi déséquilibré, ce qui provoque un mouvement de vibration.

Selon un mode de réalisation, le vibrateur 29 comprend un carter comportant un piston, agencé pour être déplacé par air comprimé ou électromagnétisme. Les allers-retours rapides du piston provoquent des percutions linéaires et ainsi un mouvement de vibration.

Comme représenté en figure 2, le dispositif d'écoulement 3 comprend en outre un système d'amortissement 31 agencé pour amortir le mouvement de vibration du système de vibration 13. Le système de vibration comprend un amortisseur 36.

Le système d'amortissement 31 comprend un support 33 du dispositif d'écoulement comprenant une première portion 33a solidaire du dispositif d'écoulement 3, et une deuxième portion 33b, reliée à un bâti 35 du dispositif d'écoulement 3.

Selon un mode de réalisation, le bâti 35 est solidaire du châssis de l'engin agricole.

Selon un autre mode de réalisation, le bâti 35 est mobile par rapport au châssis de l'engin agricole entre une position escamotée et une position déployée dans laquelle l'ouverture d'introduction 9 du logement de réception 7 est destinée à être accessible à un utilisateur.

Selon un autre mode de réalisation, le bâti 35 est indépendant du châssis de l'engin agricole. L'encombrement du dispositif d'écoulement 3 est ainsi compatible avec l'encombrement du dispositif de dispersion.

L'amortisseur 36 comprend plusieurs éléments élastiques 37a, 37b pouvant être du type ressort ou plot élastique. Les éléments élastiques 37a, 37b sont disposés entre la première portion 33a et la deuxième portion 33b du support 33. Les éléments élastiques 37a, 37b comprennent chacun une première extrémité 39a, 39b, solidaires de la première portion 33a du support 33, et chacun une deuxième extrémité 41a, 41b, solidaires de la deuxième portion 33b du support 33.

Le dispositif d'écoulement comprend en outre un système de mesure de masse 43 configuré pour mesurer la masse de l'élément de réception 6. L'utilisateur peut ainsi assurer une meilleure gestion de la quantité de produit insérée dans le dispositif d'écoulement 3. En effet, l'utilisateur a ainsi connaissance de la quantité précise de produit inséré. Les impacts économique et environnemental sont ainsi limités.

Le système de mesure de masse 43 est configuré pour mesurer la masse de l'élément de réception 6 et du produit contenu dans l'élément de réception 6. L'utilisateur a ainsi connaissance de la masse de produit contenu dans le dispositif d'écoulement et assure ainsi une gestion plus performante du débit de chantier.

Le système de mesure de masse 43 comprend un système de transmission d'information de masse configuré pour transmettre une information de masse à l'utilisateur. L'information de masse est une valeur exprimée en une unité de masse par exemple le kilogramme.

Selon un mode de réalisation, le système de transmission d'information de masse comprend une interface visuelle. L'interface visuelle peut comprendre des marqueurs visuels correspondant chacun à une information de masse prédéterminée, comme une graduation de l'information de masse. L'interface visuelle comprend en outre un indicateur mobile, comme une aiguille, configuré pour occuper une pluralité de positions, chaque position correspondant à une information de masse. L'indicateur mobile est disposé face à la pluralité de marqueurs visuels. Ainsi, l'utilisateur peut établir une correspondance entre la position adoptée par l'indicateur mobile et le marqueur visuel le plus proche de cette position pour déterminer la masse de produit introduit dans l'élément de réception.

Selon un autre mode de réalisation, le système de transmission d'information de masse comprend une interface de communication configurée pour transmettre une information de masse à une interface utilisateur, destinée à afficher l'information de masse. Ainsi, l'information est accessible facilement pour l'utilisateur.

Selon un mode de réalisation, l'interface de communication est configurée pour transmettre l'information de masse à l'interface utilisateur par signal électrique.

Selon un autre mode de réalisation, l'interface de communication est configurée pour transmettre l'information de masse à l'interface utilisateur par un protocole de communication sans fil, par exemple un protocole de communication sans fil de type conforme à la norme IEEE 802.11 / WIFI ou de type conforme à la norme réseau UMTS ou de type conforme à toute autre norme réseau.

Selon un mode de réalisation, le système de transmission d'information de masse comprend l'interface utilisateur, configurée pour afficher une information de masse. Ainsi, l'interface utilisateur est intégrée dans le système de mesure de masse.

Selon un mode de réalisation, l'interface utilisateur est disposée en fixe à proximité du dispositif d'écoulement ou de commandes de l'engin agricole.

Selon un autre mode de réalisation, l'interface utilisateur est disposée sur un appareil mobile dépendant de l'engin agricole, tel qu'une télécommande comprenant une fenêtre d'affichage.

Selon un autre mode de réalisation, l'interface de communication est configurée pour interagir avec une interface utilisateur externe. L'interface utilisateur peut notamment être réalisée comme une interface Web hébergée sur un serveur et accessible à distance ou localement par un terminal de type ordinateur fixe ou terminal portable tel qu'un ordinateur portable, une tablette ou un ordiphone.

Le système de mesure de masse comprend en outre une unité de contrôle agencée pour transmettre une information de masse à l'interface de communication.

Le système de mesure de masse comprend trois capteurs de masse 45a, 45b, 45c. Les capteurs de masse 45a, 45b, 45c sont disposés entre le support 33 et le bâti 35 dans le mode de réalisation représenté en figure 2.

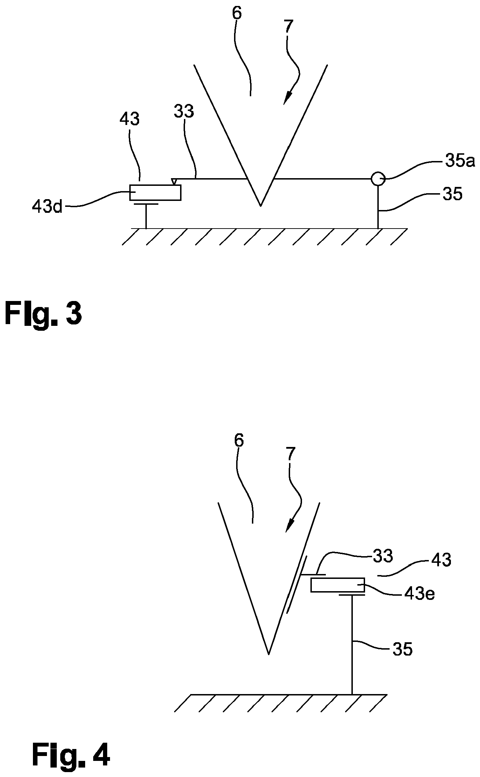

Selon un autre mode de réalisation représenté en figure 3, au moins un capteur de masse 43d de type flexion est combiné à un axe de rotation 35a disposé entre le support 33 et le bâti 35. Dans ce cas, l'élément de réception 6 est en rotation par rapport au bâti 35. Afin de garantir une bonne précision de la mesure, il est nécessaire que la distance entre le capteur et le centre de gravité du produit introduit dans le logement de réception 7 soit constante, et que les frottements sur l'axe de rotation 35a soient négligeables.

Selon un autre mode de réalisation représenté sur la figure 4, le système de mesure de masse 43 comprend un seul capteur de masse 43e de type à appui central entre le support 33 et le bâti 35 ayant pour avantage la possibilité décentrer le capteur par rapport au centre de gravité du logement de réception 7.

Selon un autre mode de réalisation non représenté, le système de mesure de masse 43 comprend une jauge de contrainte. La jauge de contrainte est ménagée dans le bâti 35. Le support 33 est alors disposé directement sur le bâti 35 au niveau de la jauge de contrainte.

Selon un mode de réalisation, le système de mesure de masse 43 est configuré pour commander le déclenchement d'une alarme sonore ou visuelle lorsque l'information de masse est supérieure et/ou inférieure à une valeur seuil prédéterminée. Grâce à ces dispositions, l'utilisateur est en outre averti par alarme si la quantité de produit introduite dans le dispositif d'écoulement 3 est inférieure ou supérieure à une quantité seuil prédéterminée.

L'élément de réception 6 comprend au moins une portion lisse ou présentant des propriétés anti-adhérente. L'élément de réception peut également comprendre un revêtement anti-adhérent, comme un vernissage ou un revêtement Téflon^{®}. L'élément de réception est de préférence en matériau métallique, tel que l'acier inoxydable, ou en matériau plastique, par exemple thermoplastique. Le matériau plastique peut avoir des propriétés anti-adhérentes.

Le dispositif d'écoulement 3 peut comprendre en outre un système de mesure de remplissage de l'élément de réception. L'utilisateur peut ainsi déduire la densité du produit inséré dans l'élément de réception. L'utilisateur dispose ainsi de plusieurs paramètres lui permettant de contrôler la quantité de produit introduite dans l'élément de réception 6. Le système de mesure de remplissage comprend également un système de transmission d'information de remplissage configuré pour transmettre une information de remplissage à l'utilisateur.

Selon un mode de réalisation de l'invention, le système de transmission d'information de remplissage comprend une interface visuelle. Ainsi, l'utilisateur peut contrôler plus précisément la quantité de produit introduite dans l'élément de réception. La paroi 8 comprend une portion transparente (non visible) s'étendant entre l'ouverture d'introduction 9 et l'ouverture de sortie 11. L'interface visuelle du système de transmission d'information de remplissage comprend la portion transparente. L'interface visuelle peut comprendre en outre une pluralité de marqueurs visuels correspondant chacun à une information de remplissage de l'élément de réception 6, à la manière d'une graduation d'informations de remplissage. Ainsi, l'utilisateur peut contrôler plus précisément la quantité de produit introduite dans l'élément de réception 6.

Selon un autre mode de réalisation de l'invention, l'élément de réception 6 comprend un détecteur de remplissage disposé entre l'ouverture d'introduction 9 et l'ouverture de sortie 11. Grâce à cette disposition, la mesure du remplissage de l'élément de réception 6 est réalisée électroniquement. La marge d'erreur de mesure de la quantité de produit inséré dans le dispositif d'écoulement 3 est donc réduite.

Par exemple, le détecteur de remplissage comprend un capteur de présence ou un capteur de luminosité.

Selon un autre mode de réalisation de l'invention compatible avec les caractéristiques citées dans les modes de réalisation précédents, le système de transmission d'information de remplissage comprend une interface de communication configurée pour transmettre une information de remplissage à une interface utilisateur, destinée à afficher l'information de remplissage. Ainsi, l'information de remplissage est accessible facilement pour l'utilisateur.

Selon un mode de réalisation, l'interface de communication est configurée pour transmettre l'information de remplissage à l'interface utilisateur par signal électrique.

Selon un mode de réalisation, l'interface de communication est configurée pour transmettre l'information de remplissage à l'interface utilisateur par un protocole de communication sans fil, par exemple un protocole de communication sans fil de type conforme à la norme IEEE 802.11 / WIFI ou de type conforme à la norme réseau UMTS ou de type conforme à toute autre norme réseau.

De la même manière que pour le système de mesure de masse, l'interface utilisateur peut être disposée en fixe à proximité du dispositif d'écoulement ou de commandes de l'engin agricole, ou sur un appareil mobile dépendant de l'engin agricole, tel qu'une télécommande comprenant une fenêtre d'affichage ou sur une interface utilisateur externe. L'interface utilisateur externe peut notamment être réalisée comme une interface Web hébergée sur un serveur et accessible à distance ou localement par un terminal de type ordinateur fixe ou terminal portable tel qu'un ordinateur portable, une tablette ou un ordiphone.

Le système de mesure de remplissage peut en outre comprendre une unité de contrôle agencée pour transmettre une information de mesure de remplissage à l'interface de communication.

Selon un mode de réalisation, le système de transmission d'information de remplissage et le système de transmission d'information de masse sont configurés pour transmettre une information de mesure de remplissage et respectivement une information de masse à une même interface utilisateur. Grâce à ces dispositions, l'information de masse et l'information de remplissage sont affichées sur une même interface. La lecture des informations est donc facilitée.

Selon un mode de réalisation, l'interface utilisateur du système de transmission d'information de remplissage et l'interface utilisateur du système de transmission d'information de masse sont indépendantes. Ainsi, le système de mesure de masse et le système de mesure de remplissage peuvent fonctionner de façon indépendante.

L'unité de contrôle du système de mesure de remplissage est agencée pour fournir une information de volume de produit inséré dans l'élément de réception. Le dispositif d'écoulement comprend un système de conversion entre une information de masse et une information de volume, grâce à une information de densité renseignée par l'utilisateur.

L'information de masse est une valeur exprimée en une unité de masse par exemple le kilogramme. L'information de volume est une valeur exprimée en une unité de volume par exemple le litre. Le circuit hydraulique 5 comprend un réservoir 47. Le pulvérisateur est agencé pour prélever le fluide dans le réservoir 47 avant de le disperser.

Le circuit hydraulique 5 comprend en outre un accélérateur de fluide 49 disposé en aval du dispositif d'écoulement 3 et plus particulièrement, en aval de l'élément de fermeture 15 du dispositif d'écoulement 3. L'accélérateur de fluide 49 comprend un système venturi 51. On entend par système venturi, un conduit d'une section de dimension déterminée comprenant une portion de section de dimension inférieure, de façon à former un différentiel de pression de fluide et ainsi de provoquer une accélération du fluide.

Le réservoir 47 est disposé en aval de l'accélérateur de fluide 49. Le produit inséré dans le dispositif d'écoulement 3 passe alors dans un premier temps par l'accélérateur de fluide 49 pour atteindre le réservoir 47.

Le circuit hydraulique 5 comprend une pompe 53 disposée en aval du réservoir 47. La pompe 53 est reliée en aval de l'élément de fermeture du logement de réception 7 et en amont de l'accélérateur de fluide 49.Le solvant est disposé dans le réservoir 47. La pompe 53 est configurée pour convoyer le solvant depuis le réservoir 47 vers l'aval de l'élément de fermeture 15 afin de fluidifier le produit.

Le système de vibration 13 est raccordé à la pompe 53, en aval de celle-ci. Le système de vibration 13 est relié au circuit hydraulique 5 entre l'élément de fermeture 15 et l'accélérateur de fluide 49. Ainsi, lorsque le système de vibration 13 est en fonctionnement, la pompe 53 propulse le fluide dans le système de vibration 13 à partir du réservoir 47. La turbine déséquilibrée est ainsi mise en rotation. Un mouvement de vibration est alors généré et le système de vibration 13 transmet mécaniquement ce mouvement à la paroi 8 du dispositif d'écoulement 3.

Les systèmes de rinçage et de nettoyage 19, 21 sont reliés hydrauliquement en aval de la pompe 47.

Un procédé de dispersion de produit agricole est décrit ci-dessous.

Dans une première étape, on procède au remplissage d'un dispositif d'écoulement 3. Tout d'abord, on détermine au moins une valeur seuil d'une information de masse et/ou d'une information de volume, puis on remplit l'élément de réception 6 jusqu'à atteindre la valeur seuil.

La valeur seuil est optionnellement renseignée au système de mesure de masse 43 en tant que valeur de consigne.

Ensuite, on ouvre l'élément de fermeture 15 et/ou on actionne manuellement ou automatiquement l'accélérateur de fluide.

Par exemple, on dispose de produit conditionné en sac de 20 kilogrammes. Pour une quantité de produit à pulvériser de 70 kilogrammes, on ouvre l'élément de fermeture 15, on verse trois sacs de produit en continu, puis on ferme l'élément de fermeture 15, on renseigne une valeur seuil de 10 kilogrammes au système de mesure de masse 43, lorsque la valeur seuil de 10 kilogrammes est atteinte, on ouvre manuellement l'élément de fermeture, ou le système de mesure de masse 43 commande l'ouverture de l'élément de fermeture 15 de façon automatique.

Dans une première étape, l'utilisateur met en fonctionnement la pompe 53 qui permet d'accélérer le fluide dans l'accélérateur de fluide 49. Par effet de venturi, celle-ci créer une dépression en aval de l'élément de fermeture 15.Dans une deuxième étape, l'utilisateur ouvre l'élément de fermeture 15 pour permettre l'écoulement du produit jusqu'à l'accélérateur de fluide. Dans une troisième étape, l'utilisateur actionne le vibrateur 29 à l'aide de la vanne 27 afin de faciliter l'écoulement du produit le long de la paroi 8 du logement de réception 7.

Dans une quatrième étape, l'utilisateur vide le contenant de produit dans le dispositif d'écoulement 3. Le produit se trouve alors fluidifié sous l'action de l'accélérateur de fluide 49 en aval de l'élément de fermeture 15 et transporté vers le réservoir 47.

Dans une cinquième étape, lorsque l'incorporation des différents produits est terminée, l'utilisateur modifie le circuit hydraulique 5 de manière à ce que la pompe 53 n'aspire plus dans le réservoir 47 mais dans un autre réservoir d'eau propre non représenté.

Dans une sixième étape, l'utilisateur actionne la rampe de sortie d'eau 21a par l'intermédiaire de la vanne 21c ainsi que la buse de rinçage 19a par l'intermédiaire de la vanne 19c, afin de nettoyer la paroi 8 du système de nettoyage 21.

Bien entendu, la présente invention ne se limite pas aux modes de réalisation décrits et représentés, fournis à titre d'exemples illustratifs et non limitatifs.

## Revendications

1. Dispositif d'écoulement pour ensemble de dispersion d'un produit, par exemple destiné à être rapporté sur un engin agricole, comprenant un élément de réception(6), tel qu'une trémie, destiné à recevoir le produit,
**caractérisé en ce que** le dispositif d'écoulement (3) comprend un système de mesure de masse (43) configuré pour mesurer la masse de l'élément de réception (6).

2. Dispositif d'écoulement selon la revendication 1, dans lequel le système de mesure de masse (43) comprend un système de transmission d'information de masse configuré pour transmettre une information de masse à l'utilisateur.

3. Dispositif d'écoulement selon l'une des revendications 1 ou 2, dans lequel le système de transmission d'information de masse comprend une interface de communication configurée pour transmettre une information de masse à une interface utilisateur, destinée à afficher l'information de masse.

4. Dispositif d'écoulement selon l'une des revendications précédentes, dans lequel le système de mesure de masse (43) comprend au moins un capteur de masse (45a, 45b, 45c).

5. Dispositif d'écoulement selon l'une des revendications précédentes, comprenant un bâti (35) et dans lequel l'au moins un capteur de masse (45a, 45b, 45c) est disposé entre l'élément de réception (6) et le bâti (35).

6. Dispositif d'écoulement selon l'une des revendications précédentes, dans lequel l'au moins un capteur de masse (45a, 45b, 45c) comprend une jauge de contrainte.

7. Dispositif d'écoulement selon l'une des revendications précédentes, dans lequel le système de mesure de masse (43) est configuré pour commander, en fonction d'une valeur seuil prédéterminée de l'information de masse :
- le déclenchement d'une alarme sonore et/ou visuelle ; et/ou
- l'ouverture de l'élément de fermeture (15) ; et/ou
- l'actionnement de l'accélérateur de fluide (49)

8. Dispositif d'écoulement selon l'une des revendications précédentes, dans lequel l'élément de réception (6) comprend au moins une portion lisse et/ou anti-adhérente.

9. Dispositif d'écoulement selon l'une des revendications précédentes, comprenant un système de conversion de l'information de masse vers une information de volume à partir d'une information de densité du produit.

10. Dispositif d'écoulement selon l'une des revendications précédentes, comprenant un système de vibration (13) configuré pour transmettre un mouvement de vibration à au moins une paroi (8) de l'élément de réception (6).

11. Ensemble de dispersion comprenant :
- un dispositif d'écoulement (3) conforme à l'une des revendications précédentes ; et
- un dispositif de dispersion du produit.

12. Engin agricole comprenant un ensemble de dispersion selon la revendication 11.

13. Procédé de remplissage d'un dispositif d'écoulement conforme à l'une quelconque des revendications 1 à 10, comprenant les étapes consistant à :
- déterminer au moins une valeur seuil d'une information de masse et/ou d'une information de volume ;
- remplir l'élément de réception (6) jusqu'à atteindre la valeur seuil.

14. Procédé de remplissage selon la revendication 13, comprenant l'étape consistant à renseigner une valeur de consigne au système de mesure de masse (43) correspondant à la valeur seuil.

15. Procédé de remplissage selon l'une des revendications 13 ou 14, comprenant, suite à l'étape de remplissage de l'élément de réception (6), l'étape consistant à ouvrir l'élément de fermeture (15) et/ou actionner manuellement ou automatiquement l'accélérateur de fluide (49).
